(19) Europäisches Patentamt
European Patent Office
Office européen des brevets

(11) Veröffentlichungsnummer: **0 041 048**
**B1**

(12) **EUROPÄISCHE PATENTSCHRIFT**

(45) Veröffentlichungstag der Patentschrift: **02.01.85**

(21) Anmeldenummer: **81810189.1**

(22) Anmeldetag: **18.05.81**

(51) Int. Cl.³: **C 08 G 73/06**, C 07 D 227/087, C 07 C 31/20, C 07 C 31/27, C 07 C 33/26, C 07 D 223/10

# (54) Gemische zur Herstellung von stickstoffhaltigen Polyaddukten.

(30) Priorität: **23.05.80 CH 4055/80**

(43) Veröffentlichungstag der Anmeldung: **02.12.81 Patentblatt 81/48**

(45) Bekanntmachung des Hinweises auf die Patenterteilung: **02.01.85 Patentblatt 85/1**

(84) Benannte Vertragsstaaten: **CH DE FR GB LI NL**

(56) Entgegenhaltungen:
**DE - A - 1 905 098**
**DE - B - 1 261 671**

(73) Patentinhaber: **CIBA-GEIGY AG, Postfach, CH-4002 Basel (CH)**

(72) Erfinder: **Lohse, Friedrich, Prof. Dr., Buchenstrasse 23, CH-4104 Oberwil (CH)**
Erfinder: **Trachsler, Dieter, Dr., Liebrütistrasse 21/15, CH-4303 Kaiseraugst (CH)**

EP 0 041 048 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gemisch zur Herstellung von neuen vernetzten stickstoffhaltigen Polyaddukten. Das Gemisch enthält eine organische Verbindung mit mindestens 2 C-Atomen und mindestens 2 Hydroxy-Gruppen und ein N-Cyanlactam.

Aus der DE-OS 2 533 119 ist es bekannt, hochmolekulare Polytriazine dadurch herzustellen, daß man di- und polyfunktionelle aromatische Cyanamide mit di- und polyfunktionellen aromatischen Cyanaten bei erhöhter Temperatur umsetzt. Analogerweise erhält man substituierte Polytriazine durch die Umsetzung von aromatischen Cyanaten mit aromatischen N-Cyansulfonamiden, wie in der DE-OS 2 533 126 beschrieben ist, oder durch Polyaddition von N-Cyanamidaryl-cyanaten.

Weiterhin ist die Homo- und Copolymerisation von Alkylendicyanamiden in der US-PS 3 291 673 beschrieben. Man erhält harte, farblose und transparente Polymere, deren Struktur nicht näher beschrieben wird.

Es ist aus der US-PS 3 308 101 bekannt, daß die Umsetzung von Monocyanamiden mit Biscyanamiden zu vernetzten Polymeren mit wiederkehrenden Melaminstruktureinheiten führt.

Weiterhin ist die Herstellung von substituierten Polyaminen durch die Polyaddition von Bis-cyanamiden sekundärer Alkylendiamine durch thermische Behandlung in der US-PS 3 779 997 beschrieben.

Auch die Polymerisation polyfunktioneller Cyanamide sekundärer Amine mit katalytischen bis mehr als molaren Mengen ein- oder mehrwertiger Hydroxylverbindungen bei Temperaturen von 50—250°C zu polymeren Produkten ist aus der DE-OS 1 595 651 bekannt.

Ferner ist bekannt, daß N-Cyanlactame wirksame Polymerisationskatalysatoren sind, z. B. für die anionische Polymerisation von $\alpha$-Pyrrolidon (DE-AS 1 261 671) oder bei der Herstellung von Polyamiden (DE-OS 1 905 098).

Es wurde nun gefunden, daß sich N-Cyanlactame als additionsfähige Polymerisationskomponenten zur Herstellung von vernetzten Polyaddukten eignen.

Gegenstand der vorliegenden Erfindung ist daher ein Gemisch zur Herstellung von vernetzten stickstoffhaltigen Polyaddukten, das dadurch gekennzeichnet ist, daß es

a) ein N-Cyanlactam der Formel I oder II

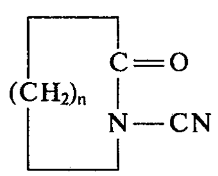

(I)

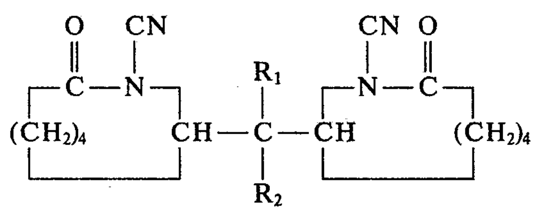

(II)

worin n eine ganze Zahl von 2 bis 11 bedeutet, die Methylen-Kohlenstoffatome gegebenenfalls durch insgesamt eine oder zwei Methyl- oder Äthyl-Gruppen substituiert sind, und $R_1$ und $R_2$ unabhängig voneinander Wasserstoff oder Methyl bedeuten, und

b) eine monomere oder oligomere organische Verbindung mit mindestens 2 C-Atomen und mindestens 2-Hydroxy-Gruppen, enthält.

Eine Vorzugsform der Erfindung stellen Gemische dar, in welchen die Komponente b) in solchen Mengen enthalten ist, daß auf 1 Mol a) 0,2 bis 3,0-Hydroxyläquivalente der Komponente b) fallen.

Geeignete Verbindungen der Formel I sind z. B. N-Cyanpyrrolidon, N-Cyanpiperidon, N-Cyancaprolactam, N-Cyancapryllactam, N-Cyanoenanthlactam, N-Cyancaprinlactam, N-Cyanlaurinlactam, N-Cyan-$\varepsilon$-methylcaprolactam oder N-Cyan-$\varepsilon$-äthylcaprolactam.

Bevorzugt ist n eine ganze Zahl von 3 bis 5.

$R_1$ und $R_2$ sind in den Verbindungen der Formel II bevorzugt Wasserstoff.

Als Komponente b) können monomere organische Verbindungen verwendet werden, wie z. B.:

A. Diole der Formel

$$HO—Q—OH \qquad (IV)$$

worin Q ein geradkettiger oder verzweigter, gesättigter oder ungesättigter, gegebenenfalls mit O-Brükken unterbrochener aliphatischer Rest mit 2—12 C-Atomen ist, einen gesättigten oder ungesättigten zweiwertigen cycloaliphatischen Rest mit 5—6 C-Atomen oder die Gruppe

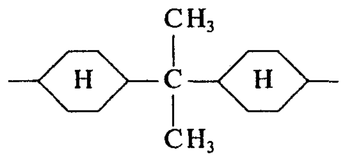

bedeutet, oder gegebenenfalls die mit Halogen, $C_1$—$C_4$ Alkoxy, Phenoxy oder $C_1$—$C_4$ Alkylphenoxy substituierten Derivate der genannten Reste bedeutet, oder die Gruppe

$$—(CH_2)_{n'}—Y_1—(CH_2)_{n'}—$$

worin n' eine Zahl von 1 bis 4 bedeutet und $Y_1$ für $C_5$—$C_6$ Cycloalkylen, Phenylen, für die Gruppe

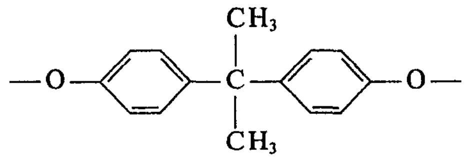

steht, oder einen 2wertigen gegebenenfalls kondensierten N-Heterocyclus bedeutet.

Beispiele für Verbindungen der Formel IV sind: Äthylenglykol, Propan-1,2-diol, Propan-1,3-diol, Butan-1,3-diol, Butan-1,4-diol, Hexan-1,6-diol, Dodecan-1,12-diol, Neopentylglykol, 2-Äthyl-hexan-1,3-diol, Xylylenglykol, Bis-(hydroxyäthyläther) von Bisphenol A, ferner ungesättigte, wie Buten-1,4-diol, Butin-1,4-diol, ferner cycloaliphatische, wie Cyclohexan-1,2-diol, Cyclohexan-1,3-diol, Cyclohexan-1,4-diol, hydriertes Bisphenol A, 1,4-Bis-(hydroxymethyl)-cyclohexan, ferner Diäthylenglykol, Dipropylenglykol, 2,3-Dihydroxypropyläther von p-Methylphenol, 1,3-Bis-hydroxyäthylhydantoin, N,N'-Bis-hydroxyäthyl-benzimidazol oder N,N'-Bis-hydroxyäthyl-perimidon.

Bevorzugt sind Verbindungen der Formel IV, worin Q eine Methylenkette mit 2 bis 6 C-Atomen oder die Gruppe

$$—(CH_2)_{n'}—Y_1—(CH_2)_{n'}—$$

bedeutet, wobei n' und $Y_1$ die zuvor genannte Bedeutung haben.

B. Hydroxyester der Formel V

$$HO—Q'—OOC—Y_2—COO—Q'—OH \qquad (V)$$

worin $Y_2$ eine direkte Bindung, ein geradkettiger oder verzweigter zweiwertiger Alkylrest mit 2—12 C-Atomen, ein gegebenenfalls mit $C_1$—$C_4$ Alkyl substituiertes gesättigtes oder ungesättigtes $C_5$—$C_6$ Cycloalkylen oder Phenylen ist, das gegebenenfalls mit $C_1$—$C_4$ Alkyl substituiert sein kann, und Q' die für Q angegebene Bedeutung hat oder

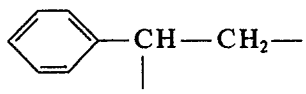

ist, wobei die —CH-Gruppe an die —OH-Gruppe gebunden ist.

Beispiele für Verbindungen der Formel V sind: Bis-(hydroxyäthyl)-terephthalsäureester, sowie die Anlagerungsprodukte von Äthylenoxid, Propylenoxid, Styroloxid an Dicarbonsäuren, wie Oxalsäure, Bernsteinsäure, Glutarsäure, Adipinsäure, Sebacinsäure, Dodecandicarbonsäure, Phthalsäure oder Isophthalsäure.

Bevorzugt ist als 2wertiger Hydroxyester eine Verbindung der Formel V, worin $Y_2$ eine $C_2$—$C_8$ Methylenkette, Cyclohexylen, Cyclohexenylen oder Phenylen bedeutet, und Q' Äthylen ist.

C. Tri- oder Tetrahydroxyverbindungen, welche geradkettige oder verzweigte gesättigte aliphatische Verbindungen sein können, wie z. B. 1,1,1-Trimethyloläthan, 1,2,3-Trihydroxypropan, 1,1,1-Trimethylolpropan, Hexan-1,2,6-triol oder Pentaerythrit, und N-heterocyclische Trihydroxyverbindungen, wie z. B. 1,3,5-Tri-hydroxyäthylcyanurat.

Bevorzugt sind $C_3$—$C_6$ aliphatische Trihydroxyverbindungen, insbesondere 1,2,3-Trihydroxypropan, 1,1,1-Trimethyloläthan und 1,1,1-Trimethylolpropan.

D. Anlagerungsprodukte, die aus der Anlagerung von 1 bis 2 Mol Epoxidverbindungen, wie z. B. Äthylenoxid, Propylenoxid oder Styroloxid, an 2- und mehrwertige Hydroxyverbindungen, wie sie unter A und C definiert sind, entstehen.

Als Komponente b) können auch oligomere organische Verbindungen verwendet werden, z. B.

E. Polyole der Formel VI

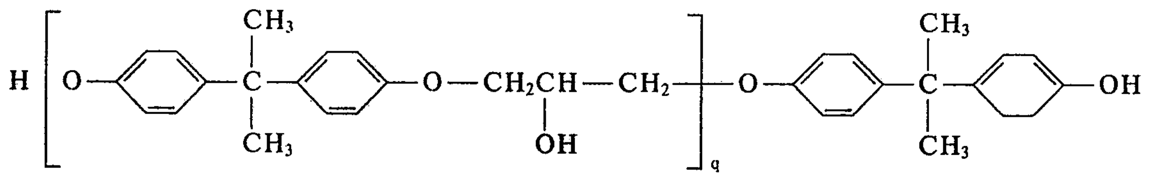

(VI)

welche durch die sogenannte Advancement-Reaktion von Diglycidyläthern des 2,2-Bis-(p-hydroxyphenyl)propans mit 2,2-Bis-(p-hydroxyphenyl)propan (bekannt als Bisphenol A) gewonnen werden können. q ist eine Zahl von 2 bis 100.

F. Polyalkylenglykole, wie z. B. Polyäthylenglykole, Polypropylenglykole und Polybutylenglykole mit einem durchschnittlichen Molgewicht von 150–6000, vorzugsweise 150–4000.

G. Hydroxyl-Endgruppen enthaltende Oligoester, die aus der Umsetzung von Glykolen oder Polyolen, wie sie unter A, C, und D beschrieben sind, und Dicarbonsäuren der Formel $HOOC-Y_2-COOH$ oder Lactone der Formel

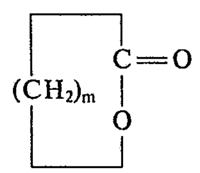

worin $Y_2$ die unter B genannte Bedeutung hat und m eine Zahl von 2 bis 11 ist, entstehen.

Bei der Synthese der Hydroxyoligoester können auch Tri- oder Tetrahydroxyverbindungen, wie sie unter C beschrieben sind, in solchen Mengen zugegeben werden, daß pro Mol Hydroxyoligoester 1 Mol Tri- bzw. Tetrahydroxyverbindung eingebaut wird, so daß verzweigte Hydroxyoligoester mit 3 bzw. 4 Hydroxylendgruppen entstehen.

Die Oligoester besitzen bevorzugt ein durchschnittliches Molgewicht von 200–4000, insbesondere 200–2000.

Als Komponente b) können auch Gemische der genannten Verbindungen eingesetzt werden, wie z. B. Diole der Gruppe A zusammen mit Hydroxyl-Endgruppen enthaltenden Oligoestern der Gruppe G oder mit Trihydroxyverbindungen der Gruppe C.

Bevorzugt wird als Komponente b) ein Glykol der Gruppe A verwendet.

Weiterhin kann in dem erfindungsgemäßen Gemisch bis zu 30 Mol-% der Hydroxyläquivalente der Komponente b) durch c) eine Monohydrxoxyverbindung der Formel III

$$R_3-OH \qquad \text{(III)}$$

worin $R_3$ ein geradkettiges oder verzweigtes $C_1-C_{12}$ Alkyl oder $C_3-C_{18}$ Alkenyl, gesättigtes $C_5-C_7$ Cycloalkyl oder $C_1-C_4$ Alkyl substituiert mit einem N- oder O-haltigen Heterocyclus, bedeutet, wobei die Reste $R_3$, mit Ausnahme von Alkenyl, gegebenenfalls einen oder mehrere Substituenten tragen, ersetzt sein.

Eine weitere Vorzugsform der Erfindung stellen Gemische dar, in welchen man die Komponenten b) und c) in solchen Mengen verwendet, daß auf 1 Mol a) 0,2 bis 3,0 Hydroxyläquivalente der Komponenten b) und c) fallen.

Als geeignete Substituenten kommen für $R_3$, wenn dieses $C_1-C_{12}$ Alkyl ist, z. B. Acetoxy, $C_1-C_4$ Alkoxy, wie beispielsweise Methoxy, Äthoxy, n-Butoxy, Cyclohexyl oder Phenyl, insbesondere Äthoxy oder Phenyl, in Betracht. Als geeignete Substituenten kommen für $R_3$, wenn dieses $C_5-C_7$ Cycloalkyl bedeutet, z. B. $C_1-C_4$ Alkyl, wie Methyl, Isopropyl oder tert.-Butyl, vorzugsweise jedoch Methyl in Betracht. Als geeignete Substituenten kommen für $R_3$, wenn dieses ein mit einem N- oder O-Heterocyclus-substituiertes $C_1-C_4$ Alkyl bedeutet, beispielsweise $C_1-C_4$ Alkyl, wie Methyl oder tert.-Butyl, vorzugsweise Methyl, in Frage, wobei diese Substituenten jeweils am Heterocyclus sind.

Bedeutet $R_3$ in der Formel III $C_1-C_{12}$ Alkyl, so kann es beispielsweise Methyl, Äthyl, Isopropyl, n-Butyl, n-Hexyl, 2-Äthylhexyl oder n-Dodecyl sein.

Bedeutet $R_3$ substituierte $C_1-C_{12}$ Alkylgruppen, so kommen vorzugsweise 2-Methoxyäthyl, 2-Äthoxyäthyl, 2-Butoxyäthyl, Cyclohexylmethyl, Benzyl und $\alpha$-Phenyläthyl in Betracht, insbesondere 3-Äthoxypropyl oder Benzyl.

Bedeutet $R_3$ $C_3-C_{18}$ Alkenyl, so kann es beispielsweise Allyl, Methallyl, 2-Methyl-butenyl oder 8-Octadecenyl sein.

Bedeutet $R_3$ $C_5-C_7$ Cycloalkyl, so kann es beispielsweise Cyclopentyl, Cyclohexyl oder Cycloheptyl sein. Bevorzugt ist $R_3$ Cyclopentyl oder Cyclohexyl, insbesondere Cyclohexyl.

Als substituiertes $C_5-C_7$ Cycloalkyl kommen vorzugsweise 3-Methoxycyclopentyl oder insbesondere 4-Methylcyclohexyl in Betracht.

Bedeutet $R_3$ $C_1$–$C_4$ Alkyl, substituiert mit einem N- oder O-haltigen Heterocyclus, so kann es sich dabei um Furfuryl oder Piperidinoäthyl handeln.

Bedeutet $R_3$ $C_1$ –$C_4$ Alkylgruppen, welche einen N- oder O-Heterocyclus tragen, die gegebenenfalls am Heterocyclus mit $C_1$–$C_4$ Alkyl substituiert sind, so kommt als $R_3$ insbesondere 3-(5',5'-Dimethylhydantoin)-propyl in Betracht.

Beispiele von Verbindungen der Formel III sind Äthanol, Isopropanol, Allylalkohol, Cyclohexanol, Furfurylalkohol oder Benzylalkohol.

Bevorzugt sind Monohydroxyverbindungen der Formel III, worin $R_3$ $C_1$–$C_{12}$ Alkyl bedeutet.

Die Polyadditionsreaktion kann bei 0°C bis +300°C, vorzugsweise bei +20°C bis +250°C, erfolgen.

Durch den Zusatz der Komponente c) kann die Flexibilität der vernetzten Formkörper erhöht werden. Ferner kann es aus arbeitstechnischen Gründen wünschenswert sein, die Viskosität der zu verarbeitenden Harzmischung durch die Komponente c) herabzusetzen. Zu diesem Zweck kann sie in Mengen von 0–30 Mol-% der Hydroxyäquivalente, vorzugsweise 1–15 Mol-%, eingesetzt werden.

N-Cyanlactame reagieren mit Di- und Polyhydroxyverbindungen unter Bildung von cyclischen und linearen Tri- und Oligomerisationsprodukten. Die Addition der Hydroxylgruppe an das N-Cyanlactam erfolgt unter Ausbildung von Estergruppen und intermediärer Freisetzung der hochreaktiven Cyanamidgruppe. Der Reaktionsablauf kann durch das folgende Schema illustriert werden:

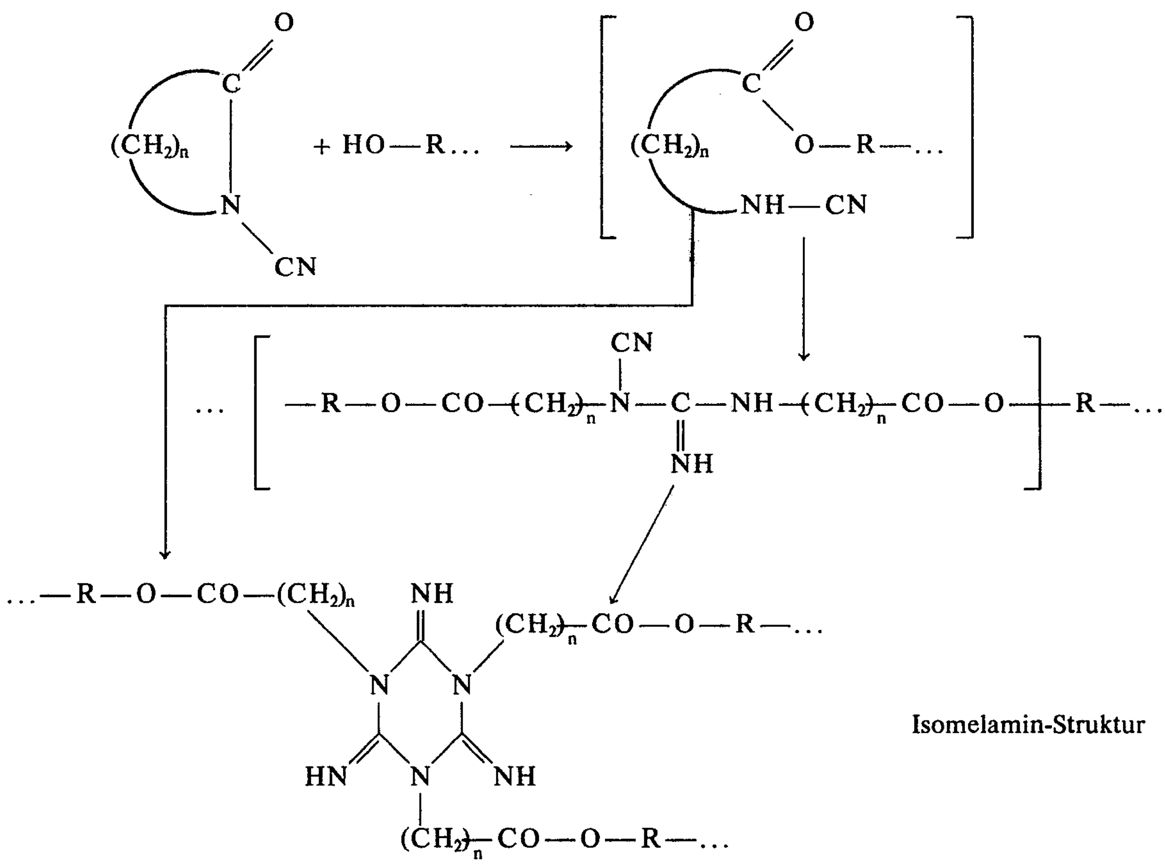

Isomelamin-Struktur

und

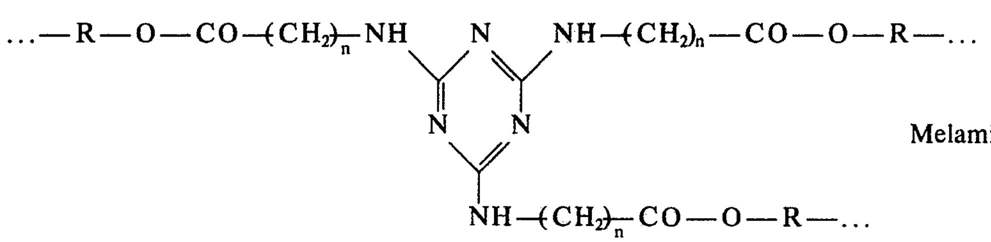

Melamin-Struktur

worin R den organischen Rest mit mindestens 2 C-Atomen und mindestens 2 Hydroxy-Gruppen der Komponente b) bedeutet.

An der Bildung der vernetzten Polyaddukte sind lineare Oligomerisationsprodukte sowie Isomelamin- und Melaminstrukturen beteiligt.

Die Polyaddition kann gegebenenfalls in Gegenwart eines Katalysators erfolgen. Geeignete Katalysatoren sind z. B. tertiäre Amine, wie Triäthylamin oder Benzyldimethylamin, Pyridin und substituierte Pyridinderivate, wie z. B. 4-Dimethylaminopyridin, Alkalialkoholate, wie z. B. Natriumhexylat, Imidazole, wie z. B. 2-Äthyl-4-methyl-imidazol, quäternäre Ammoniumsalze, wie z. B. Tetramethylammoniumchlorid oder Benzyltrimethylammoniumchlorid, Lewis-Säuren, wie z. B. Zinn-II-chlorid, Lithiumchlorid, ferner auch Bortrifluorid-ätherat oder N-p-Chlorphenyl-N',N'-dimethylharnstoff.

Die Katalysatoren können in Mengen von 0,1 bis 5 Gew.-%, vorzugsweise 0,1 bis 2 Gew.-%, bezogen auf das Reaktionsgemisch, eingesetzt werden.

Die Ausgangsverbindungen der Formel I und II können nach dem in den DE-OS 1 905 098 oder 1 175 678 beschriebenen Verfahren hergestellt werden. Sie zeichnen sich durch gute Lagerstabilität selbst bei erhöhter Temperatur aus.

Die Hydroxyverbindungen der Komponente b) und c) sind im Handel erhältlich oder nach bekannten Methoden auf einfache Weise herzustellen.

Die erfindungsgemäßen härtbaren Mischungen können als Gießharze, Klebstoffe, Schaumstoffe verwendet werden. Sie können auch auf Unterlagen, wie Holz, Glas, Textilien, Metall, Tonwaren, zu Überzügen verarbeitet und vor der Verarbeitung mit Füllstoffen, wie Aktivkohle, Ruß, Holzmehl, Kieselgur, Pigmenten, Glasfasern oder Metallpulvern, versetzt werden.

Die folgenden Beispiele erläutern die Erfindung.

## Beispiele

Die Prüfung der Harzsysteme erfolgt durch Torsionsklebefestigkeitsversuche. Zu diesem Zweck werden das N-Cyanlactam und eine äquivalente Menge der Hydroxylverbindung (1 Äquivalent OH pro Mol Cyanlactam) gemischt, wobei bei Raumtemperatur oder gegebenenfalls erhöhter Temperatur mehr oder weniger viskose, homogene Gemische entstehen. Den Gemischen werden in einigen Fällen katalytische Mengen eines Katalysators zugegeben.

Zur Messung der Torsionsklebefestigkeit werden 5 Hohlzylinder (Außendurchmesser 12 mm) aus Aluminium mit der zu prüfenden Harzmischung auf eine kräftige Aluminiumplatte geklebt, wobei die Klebeflächen des Zylinders sowie der Platte zuvor nach dem Pickling-Verfahren (1 Std. Chromschwefelsäure bei 60°C) gereinigt und behandelt werden. Anschließend werden die Testproben unterschiedlichen Härtungszeiten und -temperaturen unterworfen. Nach Abkühlung auf Raumtemperatur wird mittels eines Sechskantrohres ein stetig zunehmendes Torsionsmoment auf die Hohlzylinder ausgeübt. Über einen Hebelarm wird das Drehmoment, welches die Verklebung belastet, von einem Kraftaufnehmer gemessen und elektrisch registriert. Die Schubspannung in der Klebstoffschicht wächst dann bis zum Bruch, wobei die zum Bruch aufzuwendende Kraft in $Nmm^{-2}$ registriert wird.

### Beispiel 1

N-Cyanpyrrolidon und 1,4-Bis-(hydroxymethyl)-benzol werden im Molverhältnis 2 : 1 gemischt und ohne Zugabe eines Katalysators bei verschiedenen Temperaturen gehärtet. Torsionsklebefestigkeit:

Gehärtet 1 Stunde bei 100°C: 35,3 $Nmm^{-2}$,
Gehärtet 1 Stunde bei 140°C: 44,5 $Nmm^{-2}$,
Gehärtet 1 Stunde bei 180°C: 57,0 $Nmm^{-2}$,
Gehärtet 5 Stunden bei 140°C: 39,7 $Nmm^{-2}$.

### Beispiel 2

N-Cyanpyrrolidon und 1,6-Hexandiol werden im Molverhältnis 2 : 1 gemischt und unter Zugabe von 1 Gew.-% Benzyldimethylamin als Katalysator bei verschiedenen Temperaturen gehärtet. Torsionsklebefestigkeit:

Gehärtet 1 Stunde bei 180°C: 34,5 $Nmm^{-2}$,
Gehärtet 5 Stunden bei 140°C: 23,6 $Nmm^{-2}$.

### Beispiel 3

N-Cyanpiperidon und 1,4-Bis-(hydroxymethyl)-benzol werden im Molverhältnis 2 : 1 gemischt und ohne Zugabe eines Katalysators bei verschiedenen Temperaturen gehärtet. Tosionsklebefestigkeit:

Gehärtet 1 Stunde bei 100°C: 27,8 $Nmm^{-2}$,
Gehärtet 1 Stunde bei 140°C: 59,0 $Nmm^{-2}$,

Gehärtet 1 Stunde bei 180°C: 58,1 $Nmm^{-2}$,
Gehärtet 5 Stunden bei 140°C: 64,8 $Nmm^{-2}$.

## Beispiel 4

N-Cyanpiperidon und 1,6-Hexandiol werden im Molverhältnis 2 : 1 gemischt und unter Zugabe von 1 Gew.-% Benzyldimethylamin als Katalysator bei verschiedenen Temperaturen gehärtet. Torsionsklebefestigkeit:

Gehärtet 1 Stunde bei 180°C: 34,7 $Nmm^{-2}$,
Gehärtet 5 Stunden bei 140°C: 15,5 $Nmm^{-2}$.

## Beispiel 5

N-Cyancaprolactam und 1,4-Bis-(hydroxymethyl)-benzol werden im Molverhältnis 2 : 1 gemischt und ohne Zugabe eines Katalysators bei verschiedenen Temperaturen gehärtet. Torsionsklebefestigkeit:

Gehärtet 1 Stunde bei 100°C: 11,4 $Nmm^{-2}$,
Gehärtet 1 Stunde bei 140°C: 49,5 $Nmm^{-2}$,
Gehärtet 1 Stunde bei 180°C: 50,5 $Nmm^{-2}$,
Gehärtet 5 Stunden bei 140°C: 51,6 $Nmm^{-2}$.

## Beispiel 6

N-Cyancaprolactam und 1,6-Hexandiol werden im Molverhältnis 2 : 1 gemischt und unter Zugabe von 1 Gew.-% Benzyldimethylamin als Katalysator bei verschiedenen Temperaturen gehärtet. Torsionsklebefestigkeit:

Gehärtet 1 Stunde bei 140°C: 20 $Nmm^{-2}$,
Gehärtet 1 Stunde bei 180°C: 36 $Nmm^{-2}$,
Gehärtet 5 Stunden bei 140°C: 28 $Nmm^{-2}$.

## Prüfung der Polyaddukte anhand von Gießplatten

## Beispiel 7

Zur Herstellung einer Gießplatte im Format 200 × 200 × 4 mm aus N-Cyanpyrrolidon und Trimethylolpropan im Molverhältnis 3 : 1 werden 156,4 g (1,42 Mol) N-Cyanpyrrolidon und 43,6 g (0,47 Mol) Trimethylolpropan in einem Becherglas gemischt und die Mischung zur Klärung auf 60°C erwärmt. Der klaren Lösung werden 0,5 g (0,25 Gew.-%, bezogen auf die Gesamtmenge der beiden Reaktionspartner) 4-Dimethylaminopyridin als Katalysator zugemischt.

Sodann wird die Lösung auf 30°C abgekühlt und im Hochvakuum bei $1.333 \cdot 10^{-5}$ bar entgast. Anschließend wird die klare homogene Mischung in eine mit einem handelsüblichen Trennmittel auf der Basis von Silikonöl vorbehandelte und auf 60°C vorgewärmte Form gegossen. Die Härtung wird in einem Ofen während 2 Stunden bei 60°C, 2 Stunden bei 90°C und abschließend 2 Stunden bei 120°C durchgeführt.

Es werden Formplatten mit folgenden Eigenschaften erhalten:

| | |
|---|---|
| Biegefestigkeit (Maximum) (VSM*) 77 103) | 169,2 $Nmm^{-2}$ |
| Biegefestigkeit (Bruch) (VSM 77 103) | 151,1 $Nmm^{-2}$ |
| Durchbiegung (Maximum) (VSM 77 103) | 7,41 mm |
| Durchbiegung (Bruch) (VSM 77 103) | 10,43 mm |
| Schlagbiegefestigkeit (VSM 77 105) | 17,11 $kJ/m^2$ |
| Zugfestigkeit (Maximum) (DIN 53 455) | 98,8 $Nmm^{-2}$ |
| Zugfestigkeit (Bruch) (DIN 53 455) | 94,3 $Nmm^{-2}$ |
| Dehnung (Maximum) (DIN 53 455) | 10,76% |
| Dehnung (Bruch) (DIN 53 455) | 13,50% |
| Spez. Durchgangswiderstand (DIN 53 482) | $1,7 \cdot 10^{15}$ Ω · cm |
| Kriechstromfestigkeit (DIN 53 480) | Stufe KA 3 d |

*) VSM steht für Verein Schweizerischer Maschinenindustrieller.

## Beispiel 8

Man verfährt wie im Beispiel 7, jedoch mit dem Unterschied, daß man im Molverhältnis ca. 2 : 1 136,62 g (0,99 Mol) N-Cyancaprolactam und 63,48 g (0,46 Mol) 1,4-Bis-(hydroxymethyl)-benzol sowie 1 g (0,5 Gew.-% bezogen auf die Gesamtmenge der beiden Reaktionspartner) 4-Dimethylaminopyridin als Katalysator zur Reaktion bringt. Die zur Klärung der Mischung erforderliche Temperatur beträgt 120°C. Das entgaste Reaktionsgemisch wird in eine auf 130°C vorgewärmte Form gegossen. Die Härtung erfolgt während 2 Stunden bei 130°C und 1 Stunde bei 180°C.
Es werden Formplatten mit folgenden Eigenschaften erhalten:

| | |
|---|---|
| Biegefestigkeit (Maximum) (VSM 77 103) | 99,47 $Nmm^{-2}$ |
| Biegefestigkeit (Bruch) (VSM 77 103) | 52,88 $Nmm^{-2}$ |
| Durchbiegung (Maximum) (VSM 77 103) | 7,13 mm |
| Durchbiegung (Bruch) (VSM 77 103) | 20,12 mm |
| Schlagbiegefestigkeit (VSM 77 105) | 51,80 $kJ/m^2$ |
| Zugfestigkeit (Maximum) (DIN 53 455) | 56,23 $Nmm^{-2}$ |
| Zugfestigkeit (Bruch) (DIN 53 455) | 38,58 $Nmm^{-2}$ |
| Dehnung (Maximum) (DIN 53 455) | 6,01 % |
| Dehnung (Bruch) (DIN 53 455) | 23,53 % |

## Beispiel 9

Man verfährt wie im Beispiel 8, jedoch mit dem Unterschied, daß man anstelle von 1,4-Bis-(Hydroxymethyl)-benzol Trimethylolpropan verwendet.
Die folgenden Mischungen werden erstellt:

| Mischung | Molverhältnis | N-Cyancapro-lactam (g) | Trimethylolpropan (g) | Katalysator (g) |
|---|---|---|---|---|
| A | 3 : 1 | 145,40 | 44,70 | 0,95 |
| B | 1,7 : 1 | 130,86 | 71,20 | 1,01 |

Es werden Formplatten mit folgenden Eigenschaften erhalten:

| Eigenschaft | A | B |
|---|---|---|
| Biegefestigkeit ($Nmm^{-2}$) (VSM 77 103) | | |
| Maximum | 106,34 | 84,99 |
| Bruch | 67,34 | 40,72 |
| Durchbiegung (mm) (VSM 77 103) | | |
| Maximum | 8,28 | 7,27 |
| Bruch | 19,53 | 20,48 |
| Schlagbiegefestigkeit (VSM 77 105), $kJ/m^2$ | 30,68 | 73,45 |
| Zugfestigkeit ($Nmm^{-2}$) (DIN 53 455) | | |
| Maximum | 66,83 | 60,25 |
| Bruch | 65,33 | 36,08 |
| Dehnung (%) (DIN 53 455) | | |
| Maximum | 6,55 | 3,98 |
| Bruch | 10,58 | 41,03 |

## Beispiel 10

Man verfährt wie im Beispiel 7, jedoch mit dem Unterschied, daß man anstelle von Trimethylolpropan 1,4-Bis-(hydroxymethyl)-cyclohexan verwendet. Die zur Klärung der Mischungen erforderliche Temperatur beträgt 80°C.

Die folgenden Mischungen werden erstellt:

| Mischung | Molverhältnis | N-Cyanpyrrolidon (g) | 1,4-Bis-(hydroxy-methyl)cyclohexan (g) | Katalysator |
|---|---|---|---|---|
| C | 1,8 : 1 | 121,12 | 88,13 | 1,58 |
| D | 2 : 1 | 115,61 | 75,71 | 1,43 |
| E | 2,5 : 1 | 132,13 | 69,22 | 1,51 |
| F | 3 : 1 | 143,14 | 62,49 | 1,54 |

Das vorbehandelte Reaktionsgemisch wird in Formen gegossen, die auf 80°C vorgewärmt wurden. Die Härtung erfolgt während 4 Stunden bei 100°C und 1 Stunde bei 180°C.

Es werden Formplatten mit folgenden Eigenschaften erhalten:

| Eigenschaft | C | D | E | F |
|---|---|---|---|---|
| Biegefestigkeit ($Nmm^{-2}$) (VSM 77 103) | | | | |
| Maximum | 76,33 | | | |
| Bruch | 39,71 | | | |
| Durchbiegung (mm) (VSM 77 103) | | | | |
| Maximum | 8,52 | | | |
| Bruch | 20,83 | | | |
| Schlagbiegefestigkeit ($kJ/m^2$) (VSM 77 105) | 42,24 | | | |
| Zugfestigkeit ($Nmm^{-2}$) (DIN 53 455) | | | | |
| Maximum | 46,59 | 79,77 | 78,50 | 82,90 |
| Bruch | 30,09 | 44,04 | 56,47 | 62,35 |
| Dehnung (%) (DIN 53 455) | | | | |
| Maximum | 4,94 | 5,70 | 8,96 | 5,14 |
| Bruch | 30,46 | 8,19 | 24,37 | 14,53 |

**Patentansprüche**

1. Gemisch zur Herstellung von vernetzten stickstoffhaltigen Polyaddukten enthaltend

a) ein N-Cyanlactam der Formel I oder II

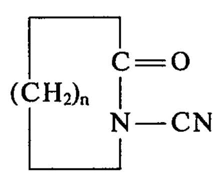

(I)

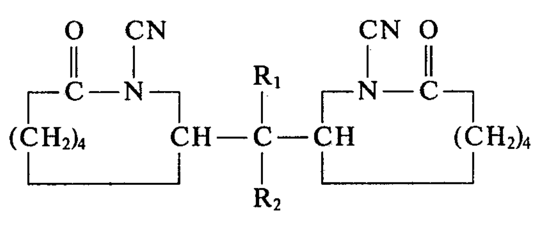

(II)

worin n eine ganze Zahl von 2 bis 11 bedeutet, die Methylen-Kohlenstoffatome gegebenenfalls durch insgesamt eine oder zwei Methyl- oder Äthyl-Gruppen substituiert sind, und $R_1$ und $R_2$ unabhängig voneinander Wasserstoff oder Methyl bedeuten, und

b) eine monomere oder oligomere organische Verbindung mit mindestens 2 C-Atomen und mindestens 2-Hydroxy-Gruppen.

2. Gemisch gemäß Anspruch 1, das dadurch gekennzeichnet ist, daß es die Komponente b) in solchen Mengen enthält, daß auf 1 Mol a) 0,2 bis 3,0 Hydroxyläquivalente der Komponente b) fallen.

3. Gemische gemäß Anspruch 1, das dadurch gekennzeichnet ist, daß bis zu 30 Mol-% der Hydroxyläquivalente der Komponente b) durch c) eine Monohydroxyverbindung der Formel III

$$R_3—OH \qquad (III)$$

worin $R_3$ ein geradkettiges oder verzweigtes $C_1—C_{12}$ Alkyl oder $C_3—C_{18}$ Alkenyl, gesättigtes $C_5—C_7$ Cycloalkyl oder einen N- oder O-haltigen Heterocyclus tragendes $C_1—C_4$ Alkyl bedeutet, wobei die Reste $R_3$, mit Ausnahme von Alkenyl, gegebenenfalls einen oder mehrere Substituenten tragen, ersetzt wird.

4. Gemisch gemäß Anspruch 3, das dadurch gekennzeichnet ist, daß es die Komponenten b) und c) in solchen Mengen enthält, daß auf 1 Mol a) 0,2 bis 3,0 Hydroxyläquivalente der Komponenten b) und c) fallen.

5. Gemisch gemäß Anspruch 1, das dadurch gekennzeichnet ist, daß es als Komponente a) eine Verbindung der Formel I gemäß Anspruch 1, worin n 3 bis 5 ist, enthält.

6. Gemisch gemäß Anspruch 1, das dadurch gekennzeichnet ist, daß es als Komponente a) eine Verbindung der Formel II gemäß Anspruch 1, worin $R_1$ und $R_2$ Wasserstoff sind, enthält.

7. Gemisch gemäß Anspruch 1, das dadurch gekennzeichnet ist, daß es als Komponente b)

*α*) Diole der Formel

$$HO—Q—OH \qquad (IV)$$

worin Q einen geradkettigen oder verzweigten, gesättigten oder ungesättigten, gegebenenfalls mit O-Brücken unterbrochenen aliphatischen Rest mit 2—12 C-Atomen, einen gesättigten oder ungesättigten zweiwertigen cycloaliphatischen Rest mit 5—6 C-Atomen, die Gruppe

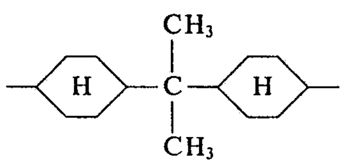

oder gegebenenfalls die mit Halogen, $C_1—C_4$ Alkoxy, Phenoxy oder $C_1—C_4$ Alkylphenoxy substituierten Derivate der genannten Reste, oder die Gruppe

$$—(CH_2)_{n'}—Y_1—(CH_2)_{n'}—$$

worin n' eine Zahl von 1 bis 4 bedeutet und $Y_1$ für $C_5—C_6$ Cycloalkylen, Phenylen, für die Gruppe

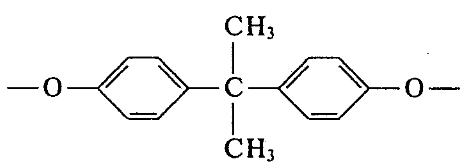

oder für einen 2wertigen gegebenenfalls kondensierten N-Heterocyclus steht, bedeutet,

*β*) geradkettige oder verzweigte gesättigte aliphatische Tri- oder Tetrahydroxyverbindungen oder N-heterocyclischen Trihydroxyverbindungen oder

*γ*) Anlagerungsprodukte, die aus der Anlagerung von 1 bis 2 Mol Epoxidverbindungen an 2- und mehrwertige Hydroxyverbindungen, wie sie unter *α*) und *β*) definiert sind, entstehen oder Hydroxyl-Endgruppen enthaltende Oligoester, die aus der Umsetzung der Hydroxyverbindungen, wie sie unter *α*), *β*) und der zuvor genannten Anlagerungsverbindungen beschrieben sind, mit Dicarbonsäuren der Formel HOOC—$Y_2$—COOH oder Lactonen der Formel

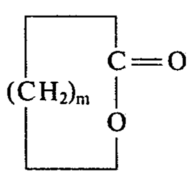

entstehen, wobei $Y_2$ eine direkte Bindung, einen geradkettigen oder verzweigten zweiwertigen Alkylrest mit 2—12 C-Atomen, ein gegebenenfalls mit $C_1—C_4$ Alkyl substituiertes gesättigtes oder ungesättigtes $C_5—C_6$ Cycloalkylen oder Phenylen, das mit $C_1—C_4$ Alkyl substituiert sein kann, und m eine Zahl von 2 bis 11 ist, bedeuten, enthält.

8. Gemisch gemäß Anspruch 7, das dadurch gekennzeichnet ist, daß es als Komponente b) ein Diol der Formel IV HO—Q—OH, worin Q eine Methylenkette mit 2 bis 6 C-Atomen oder die Gruppe

$$-(CH_2)_{n'}-Y_1-(CH_2)_{n'}-$$

bedeutet, wobei n' eine Zahl von 1 bis 4 bedeutet und $Y_1$ $C_5$—$C_6$ Cycloalkylen, Phenylen, die Gruppe

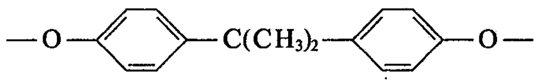

oder ein 2wertiger gegebenenfalls kondensierter N-Heterocyclus ist, enthält.

9. Gemisch gemäß Anspruch 3, dadurch gekennzeichnet, daß $R_3$ in Formel III mit Acetoxy, $C_1$—$C_4$ Alkoxy, Cyclohexyl oder Phenyl substituiertes $C_1$—$C_{12}$ Alkyl, mit $C_1$—$C_4$ Alkyl substituiertes $C_5$—$C_7$ Cycloalkyl oder am Heterocyclus mit $C_1$—$C_4$ Alkyl substituiertes, einen N- oder O-haltigen Heterocyclus tragendes $C_1$—$C_4$ Alkyl, bedeutet.

## Claims

1. A mixture for the preparation of crosslinked nitrogen-containing polyadducts, which mixture contains

a) a N-cyanolactam of the formula I or II

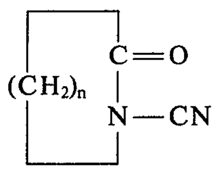

(I)

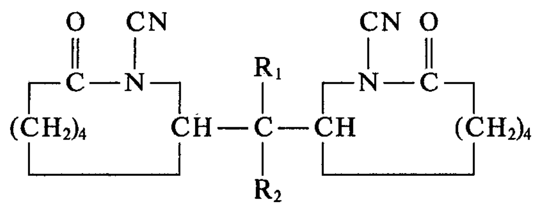

(II)

in which n is an integer from 2 to 11, the methylene carbon atoms are unsubstituted or substituted, in total, by one or two methyl or ethyl groups, and $R_1$ and $R_2$, independently of one another, are hydrogen or methyl, and

b) a monomeric or oligomeric organic compound having not less than 2 C atoms and not less than 2 hydroxyl groups.

2. A mixture according to claim 1, which contains component b) in an amount corresponding to 0.2—3.0 hydroxyl equivalents of component b) per mol of a).

3. A mixture according to claim 1, wherein up to 30 mol % of the hydroxyl equivalents of component b) are replaced by c) a monohydroxy compound of the formula III

$$R_3—OH \quad \text{(III)}$$

in which $R_3$ is straight-chain or branched $C_1$—$C_{12}$-alkyl or $C_3$—$C_{18}$-alkenyl, saturated $C_5$—$C_7$-cycloalkyl, or $C_1$—$C_4$-alkyl substituted by a N-containing or O-containing heterocyclic ring, and, except in the case of alkenyl, the radical $R_3$ can carry one or more substituents.

4. A mixture according to claim 3, which contains components b) and c) in amounts corresponding to 0.2—3.0 hydroxyl equivalents of components b) and c) per mol of a).

5. A mixture according to claim 1, which contains, as component a), a compound of the formula I according to claim 1, in which n is 3 to 5.

6. A mixture according to claim 1, which contains, as component a), a compound of the formula II according to claim 1, in which $R_1$ and $R_2$ are hydrogen.

7. A mixture according to claim 1, which contains, as component b),

*α*) a diol of the formula

$$HO—Q—OH \quad \text{(IV)}$$

in which Q is a straight-chain or branched, saturated or unsaturated aliphatic radical having 2—12 C atoms, which can be interrupted by O-bridges, or is a saturated or unsaturated divalent cycloaliphatic radical having 5—6 C atoms, or is the group

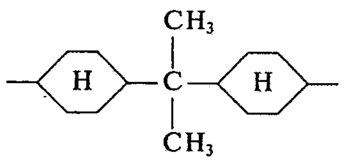

or is a derivative which is unsubstituted or substituted by halogen, $C_1$—$C_4$-alkoxy, phenoxy or $C_1$—$C_4$-alkylphenoxy, of one of the above radicals, or is the group

$$—(CH_2)_{n'}—Y_1—(CH_2)_{n'}—$$

in which n' is a number from 1 to 4 and $Y_1$ is $C_5$—$C_6$-cycloalkylene, phenylene, the group

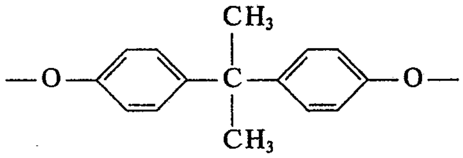

or a divalent N-heterocyclic structure, which can be a fused structure,

*β*) a straight-chain or branched saturated aliphatic trihydroxy or tetrahydroxy compound or N-heterocyclic trihydroxy compound or

*γ*) an adduct which results from the addition reaction of 1 to 2 mols of an epoxide compound with a dihydric or polyhydric hydroxy compound, as defined under *α*) and *β*); or an oligo-ester containing hydroxyl end groups, the ester being formed by reacting a hydroxyl compound, as described under *α*) and *β*), or the aforementioned adduct, with a dicarboxylic acid of the formula HOOC—$Y_2$—COOH or with a lactone of the formula

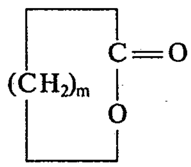

in which $Y_2$ is a direct bond, a straight-chain or branched divalent alkyl radical having 2—12 C atoms, an unsubstituted or $C_1$—$C_4$-alkyl-substituted saturated or unsaturated $C_5$—$C_8$-cycloalkylene radical or an unsubstituted or $C_1$—$C_4$-alkyl-substituted phenylene radical and m is a number from 2 to 11.

8. A mixture according to claim 7, which contains, as component b), a diol of the formula

$$HO—Q—OH \qquad (IV)$$

in which Q is a methylene chain having 2 to 6 C atoms or is the group

$$—(CH_2)_{n'}—Y_1—(CH_2)_{n'}—$$

in which n' is a number from 1 to 4 and $Y_1$ is $C_5$—$C_6$-cycloalkylene, phenylene, the group

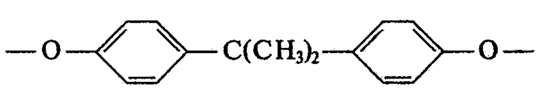

or a divalent N-heterocyclic structure, which can be a fused structure.

9. A mixture according to claim 3, where $R_3$, in formula III, is $C_1$—$C_{12}$-alkyl which is substituted by acetoxy, $C_1$—$C_4$-alkoxy, cyclohexyl or phenyl, or is $C_5$—$C_7$-cycloalkyl which is substituted by $C_1$—$C_4$-alkyl, or is $C_1$—$C_4$-alkyl which is substituted by a N-containing or O-containing heterocyclic ring which is itself substituted by $C_1$—$C_4$-alkyl.

**Revendications**

1. Mélange servant à obtenir des produits de polyaddition azotés réticulés, qui comprend:

a) un N-cyanolactame de formule I ou II

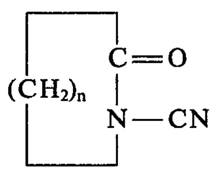

(I)

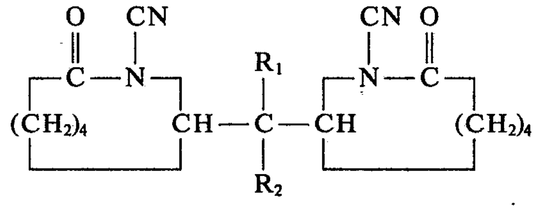

(II)

(n étant un entier de 2 à 11, les atomes de carbone des groupes méthylènes pouvant éventuellement porter au total un ou deux groupes méthyles ou éthyles et $R_1$ et $R_2$ désignant chacun, indépendamment l'un de l'autre, l'hydrogène ou un méthyle) et

b) un composé organique monomère ou oligomère ayant au moins deux atomes de carbone et au moins deux hydroxyles.

2. Mélange selon la revendication 1., caractérisé en ce qu'il contient la composante b) dans des proportions donnant 0,2 à 3,0 équivalents hydroxyliques de cette composante b) par mole de la composante a).

3. Mélange selon la revendication 1., caractérisé en ce que jusqu'à 30 moles % des équivalents hydroxyliques de la composante b) sont remplacés par c) un composé monohydroxylique de formule III

$$R_3—OH \qquad (III)$$

$R_3$ représentant un alkyle en $C_1$—$C_{12}$ ou un alcényle en $C_3$—$C_{18}$ à chaîne droite ou ramifiée, un cycloalkyle saturé en $C_5$ à $C_7$ ou un alkyle en $C_1$ à $C_4$ portant un hétérocycle avec de l'azote ou de l'oxygène, les radicaux $R_3$, à l'exception d'un groupe alcényle, pouvant éventuellement eux-mêmes porter un ou plusieurs substituants.

4. Mélange selon la revendication 3., caractérisé en ce qu'il contient les composantes b) et c) dans des proportions donnant 0,2 à 3,0 équivalents hydroxyliques de ces composantes b) et c) par mole de la composante a).

5. Mélange selon la revendication 1., caractérisé en ce qu'il contient comme composante a) un composé de formule I selon la revendication 1., dans lequel n est un nombre de 3 à 5.

6. Mélange selon la revendication 1., caractérisé en ce qu'il contient comme composante a) un composé de formule II selon la revendication 1. dans lequel $R_1$ et $R_2$ sont l'hydrogène.

7. Mélange selon la revendication 1., caractérisé en ce qu'il contient comme composante b)
*α*) des diols de formule

$$HO—Q—OH \qquad (IV)$$

dans laquelle le symbole Q désigne un radical aliphatique en $C_2$ à $C_{12}$ à chaîne droite ou ramifiée, saturé ou insaturé, éventuellement interrompu par des ponts d'oxygène, un radical cycloaliphatique divalent en $C_5$ ou $C_6$ saturé ou insaturé, le groupe

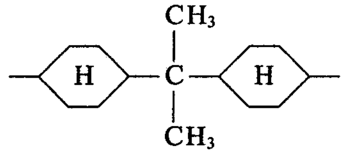

ou éventuellement un dérivé de substitution de l'un des radicaux indiqués par des halogènes, des alcoxy en $C_1$ à $C_4$, le groupe phénoxy ou des alkyl-phénoxy à alkyle en $C_1$ à $C_4$, ou encore le groupe

$$—(CH_2)_{n'}—Y_1—(CH_2)_{n'}—$$

n' étant un nombre de 1 à 4 et $Y_1$ un cycloalkylène en $C_5$ ou $C_6$, un phénylène, le groupe

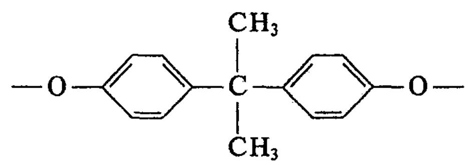

ou un radical hétérocyclique azoté divalent éventuellement condensé,

*β*) des composés trihydroxyliques ou tetrahydroxyliques aliphatiques saturés à chaîne droite ou ramifiée ou des composés trihydroxyliques hétérocycliques azotés, ou bien

*γ*) des produits d'addition résultant de l'addition de 1 à 2 moles de composés époxydiques sur des composés ayant deux hydroxyles ou plus, tels qu'ils sont définis ci-dessus en *α*) et *β*), ou bien des oligoesters à hydroxyles terminaux formés par réaction des composés hydroxylés tels que définis en *α*) et *β*) et des composés d'addition précédemment indiqués avec des acides dicarboxyliques $HOOC-Y_2-COOH$ ou des lactones de formule

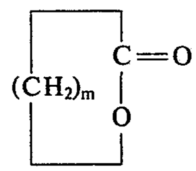

$Y_2$ désignant une liaison directe, un alkylène en $C_2$ à $C_{12}$ à chaîne droite ou ramifiée, un cycloalkylène en $C_5$ ou $C_6$ saturé ou insaturé, éventuellement porteur d'un alkyle en $C_1$ à $C_4$, ou un phénylène pouvant être également substitué par un alkyle en $C_1$ à $C_4$, et m étant un nombre de 2 à 11.

8. Mélange selon la revendication 7, caractérisé en ce qu'il contient comme composante b) un diol de formule IV HO—Q—OH, Q étant une chaîne de groupes méthylènes en $C_2$ à $C_6$ ou un groupe

$$-(CH_2)_{n'}-Y_1-(CH_2)_{n'}-$$

n' étant un nombre de 1 à 4 et $Y_1$ un cycloalkylène en $C_5$ ou $C_6$, un phénylène, le groupe

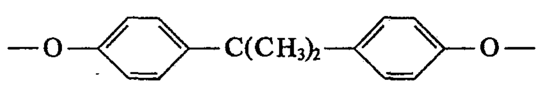

ou un radical hétérocyclique azoté divalent éventuellement condensé.

9. Mélange selon la revendication 3, caractérisé en ce que $R_3$, dans la formule III, est un alkyle en $C_1$ à $C_{12}$ substitué par un groupe acétoxy, un alcoxy en $C_1$ à $C_4$ ou un groupe cyclohexyle ou phényle, un cycloalkyle en $C_5$ à $C_7$ substitué par un alkyle en $C_1$ à $C_4$, ou un alkyle en $C_1$ à $C_4$ portant un hétérocycle avec de l'azote ou de l'oxygène, hétérocycle lui même porteur d'un alkyle en $C_1$ à $C_4$.